# EUROPEAN PATENT SPECIFICATION

(11) **EP 3 134 980 B1**
(45) Date of publication and mention of the grant of the patent: **14.08.2019**
(21) Application number: 15719442.4
(22) Date of filing: 22.04.2015
(51) Int. Cl.: B24B 49/12, B24B 49/00, H04B 10/40, B24B 41/04

(54) **DEVICE AND METHOD FOR TRANSCEIVING ALTERNATING OPTICAL SIGNALS**
VORRICHTUNG UND VERFAHREN ZUM SENDEN UND EMPFANGEN ALTERNIERENDER OPTISCHER SIGNALE
DISPOSITIF ET PROCÉDÉ POUR ÉMETTRE-RECEVOIR DES SIGNAUX OPTIQUES ALTERNATIFS

(30) Priority: 23.04.2014 IT BO20140233
(43) Date of publication of application: 01.03.2017
(73) Proprietor: Marposs Societa' Per Azioni, 40010 Bentivoglio (BO) (IT)
(72) Inventor: RUGGERI, Alessandro, I-40141 Bologna (IT)
(86) International application number: PCT/EP2015/058660
(87) International publication number: WO 2015/162154

(56) References cited:
- US-A- 4 051 363
- US-A- 5 688 160
- US-A1- 2003 201 381
- US-A1- 2006 178 780

## Description

### Technical Field

The present invention relates to a device for transceiving alternating optical signals, comprising a first part and a second part electrically isolated from each other, a secondary emitter, comprised within the second part and facing the first part, adapted to transmit an alternating optical signal, a primary receiver, comprised within the first part and facing the second part, adapted to receive the alternating optical signal and generate a corresponding analog electrical signal, and a signal detector comprised within the first part and connected to the primary receiver, adapted to extract an AC component with substantially zero average from the above-mentioned analog electrical signal.

The invention also relates to a method for transceiving alternating optical signals between a first part and a second part electrically isolated from each other, comprising the steps of transmitting an alternating optical signal, receiving such alternating optical signal and generating a corresponding analog electrical signal, and extracting an AC component with substantially zero average from the analog electrical signal.

The present invention can be advantageously but not exclusively applied to the transmission of checking signals from a rotating part to a stationary part and relevant reception, in particular in a machine tool, which the description that follows will explicitly refer without loss of generality.

### Prior Art

Unwanted vibrations are generally present in a machine tool, caused by out-of-balance conditions of the rotating tool mounted on the machine, which different factors incidental to the same tool are responsible of. For instance, the out-of-balance conditions that cause the vibrations in a grinding machine are due to imperfections connected to shape and manufacture of the grinding wheel, such as non homogeneous materials and errors of concentricity between external abrading surface and internal centering hole, namely to the inaccurate assembling of the grinding wheel to the rotating flange so the center of gravity of the grinding wheel does not lie on the rotation axis, or to modifications due to wear and/or splinter during the grinding of the workpieces being machined. Such vibrations originate inaccuracies in the characteristics of the machined workpieces, for example ovality and lobing, and uprising of forces and tensions that may damage the machine tool itself.

In order to compensate said out-of-balance conditions, the grinding machines may include a balancing device with a balancing head connected to the grinding wheel, rotating with the latter with respect to supporting means of the machine tool, for example a wheel slide designated to reciprocally move the grinding wheel and the workpiece being machined, and comprising movable masses, the position thereof is adjustable and the corresponding displacement occurs by means of driving electric motors. In addition to the balancing device with the balancing head, a vibration sensor may be included within the grinding machine, for instance an acoustic sensor to detect acoustic emissions due to the contact between the grinding wheel and the workpiece being machined or between the grinding wheel and a dressing tool, and to generate checking electrical signals. These checking signals, together with the corresponding control signals for the wheel slide, that control the speed of the reciprocal displacement between the grinding wheel and the workpiece being machined, are sent to a processing and control unit associated to the stationary part through a system for bidirectionally contactless transceiving, including a transceiver device with suitable transceiver units or capsules. The system for transceiving also enables the contactless connection between the processing and control unit and the balancing device, said system being designated for sending and receiving, in addition or as an alternative to the already cited checking signals and control signals for the wheel slide, also diagnostic signals concerning the balancing head, as well as control signals for the driving electric motors, that control the movable masses displacements.

For example the U.S. patent number US5688160, that refers to a known balancing device which a vibration sensor is associated to, shows a transceiving device that comprises a first transceiving part (stator), which is tightly connected to a stationary part of the machine tool and may be connected to the processing and control unit, and a second transceiving part (rotor), which is partially located in the spindle of the machine tool and rotates with the latter, and may be wired to the balancing head, the two transceiving parts facing to one another, in coaxial positions with respect to the spindle rotation axis which the grinding wheel is fixed to. In particular, the rotor transmits to the stator the signal coming from the vibration sensor and the possible diagnostic signals, containing for instance information about the condition and/or the proper operation of the balancing head or the whole rotating group. When a balancing device regularly operates, such as that one corresponding to the already cited U.S. patent number US5688160 and commercialized by Marposs S.p.A., the communication between rotor and stator is optically performed and generally starts in serial manner, that is digital signals are transmitted. When a more refined signal processing should be advantageously carried out, for example when the machine tool operates at high speed or in the presence of considerable background noise so it is useful to select a frequency band wherein the signal-to-noise ratio is optimum or amplify a weak checking or diagnostic signal, the communication between rotor and stator is preferably performed in exclusive analog manner, therefore any kind of serial communication between rotor and stator is interrupted. The analog optical signal that concerns such communication may be separated in two components: an AC component, bringing the information content coming from the acoustic vibration sensor, and a continuous component, only functional for the optimal transmission of the AC component and without information content, which is the reason why the continuous component is usually removed in the stator. In the optical analog communication any level of the signal received by the stator, within a determined range, is possible, zero included. Consequently, a transceiving device according to the known art does not allow recognizing whether a null signal is caused by the rotor properly operating in absence of signals detected by the acoustic vibration sensor or by a malfunctioning rotor.

### Disclosure of the Invention

Object of the present invention is to provide a device and the related method for transceiving alternating optical signals, such device and method being free from the previously described inconveniences and, concurrently, easily and cheaply implemented.

According to the present invention, this and other objects are reached by a device and a method for transceiving alternating optical signals according to claim 1 and, respectively, claim 12, that are an essential part of the present description.

These and other objects and advantages of the present invention will become apparent from the detailed description that follows, according to a preferred embodiment of the invention, given by way of non-limiting example.

### Brief Description of the Drawings

The present invention is now described with reference to the attached drawings, given by way of non-limiting examples, wherein:
- figure 1 is a schematic view, with a longitudinal partial section, of a machine tool with a device according to a preferred embodiment of the present invention;
- figure 2 is an enlarged longitudinal section of a detail of figure 1;
- figure 3 is a functional block diagram of the detail of figure 2; and
- figure 4 is a functional block diagram of a detail of a machine tool with a device according to a different embodiment of the present invention.

### Best Mode for Carrying Out the Invention

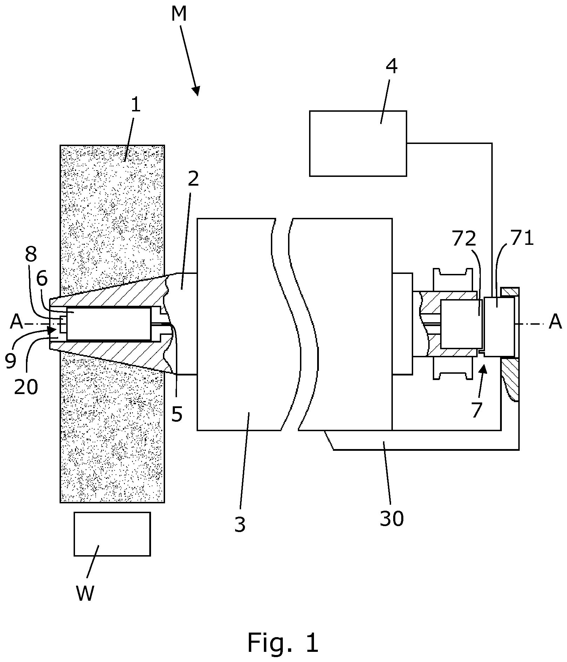

As a non-limiting example of implementation of the present invention, the diagram of figure 1 shows a machine tool **M**, in particular a grinder for machining a workpiece **W**, that includes a tool or grinding wheel **1** connected to a spindle **2** and rotating with the latter about a longitudinal axis **A** with respect to supporting means **3**, for instance a wheel slide, under the control of a processing and control unit **4**.

The machine tool **M** includes also a tool control system **9** comprising a balancing mechanism **6** and an acoustic vibration sensor **8**, for instance piezoelectric, and a device for transceiving or transceiver **7** which is electrically connected by means of a cable **5** to the balancing mechanism **6** and to the piezoelectric sensor **8** in order to enable the contactless connection of these last two to the processing and control unit **4**, as it will be better illustrated in the following. The balancing mechanism **6**, the piezoelectric sensor **8**, part of the transceiver **7** and the cable **5** are located within a longitudinal hole **20** of the spindle **2**. The balancing mechanism **6** is designated for balancing the grinding wheel **1** according to a method per se known and uses, for example, movable masses, the position thereof is adjustable through driving electric motors controlled by means of signals sent by the processing and control unit **4** through the transceiver **7** (the masses and the motors are not shown in figure). The piezoelectric sensor **8** is adapted to detect vibrations caused by the contact between the grinding wheel **1** and the workpiece **W** being machined, and send to the processing and control unit **4**, through the transceiver **7**, a corresponding checking signal that is processed in a known way to modify the speed of the reciprocal displacement between wheel slide and workpiece **W** during the grinding procedure.

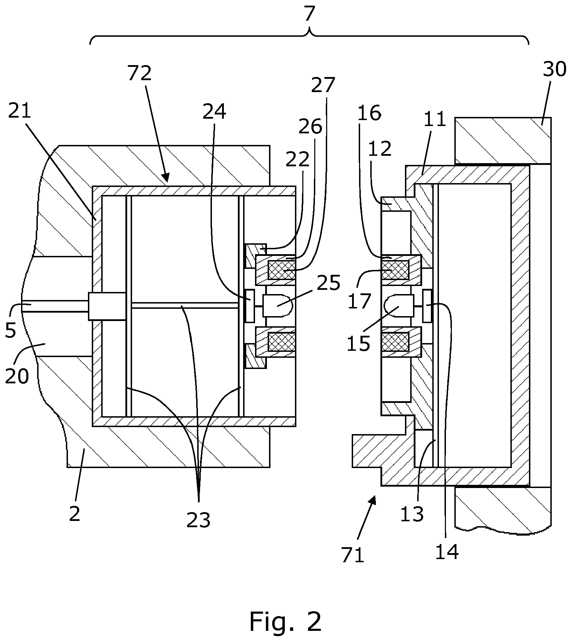

The transceiver **7** substantially comprises two parts electrically isolated, for instance spaced apart, from each other, as it is schematically illustrated in figure 2 at a distance intentionally enlarged with respect to figure 1 for better understanding, a first part or stationary part **71** connected to the supporting means **3** through an arm **30**, and a second part or rotating part **72** located within the hole **20** of the spindle **2** and adapted to rotate with the latter about a longitudinal axis **A**. The transceiver **7** realizes a contactless connection among the processing and control unit **4**, connected to the stationary part **71**, and components of the tool control system **9**, the piezoelectric sensor **8** among these, connected to the rotating part **72**.

Referring to figure 2, the stationary part **71** comprises a first casing **11** with a first reference and supporting element **12**, and primary circuits **13** fixed to the first reference and supporting element **12**, that contain optoelectronic devices with a primary receiver or photodiode **14** and a primary emitter or LED **15**, both of them facing the rotating part **72**. A first ferromagnetic cylindrical capsule **16**, also fixed to the first reference and supporting element **12**, defines a seat for primary electrical windings **17**, electrically connected to the primary circuits **13** in turn. The rotating part **72** comprises a second casing **21**, inserted into the hole **20** of the spindle **2**, with a second reference and supporting element **22**. Secondary circuits **23**, that contain optoelectronic devices with a secondary receiver or photodiode **24** and a secondary emitter or LED **25**, both of them facing the stationary part **71**, are located and fixed within the second casing **21**. A second ferromagnetic cylindrical capsule **26**, connected to the second reference and supporting element **22**, defines a further seat for secondary electrical windings **27**, electrically connected to the secondary circuits **23**.

For example, the secondary LED **25** is adapted to transmit an alternating optical signal, e.g. for checking, while the primary LED **15** is adapted to transmit an operation, e.g. control and/or request, alternating optical signal. The primary photodiode **14** and secondary photodiode **24** are adapted to receive, respectively, such optical signals, and generate corresponding and operation analog electrical signals.

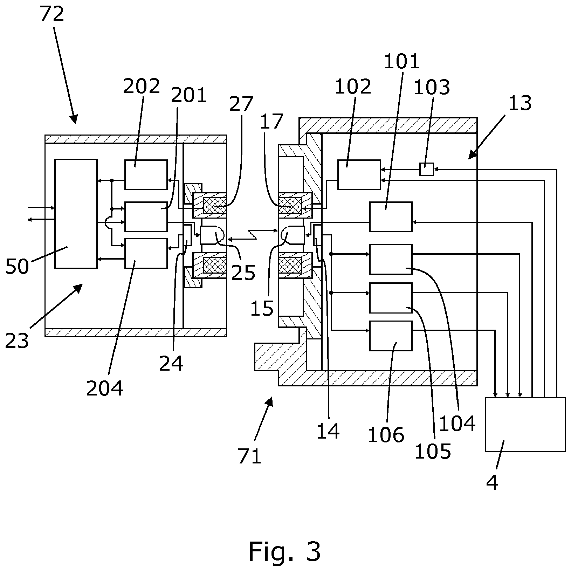

The functional blocks of figure 3, that shows architectural elements already shown in figure 2, illustrate in a very schematic way some functions of the primary circuits **13** and secondary circuits **23**, respectively of the stationary part **71** and the rotating part **72** of the transceiver **7**.

In particular, the secondary circuits **23** include an interface **50** for the interaction of the rotating part **72** with the devices connected to the spindle **2**, for instance with the driving electric motors and/or the piezoelectric sensor **8**, none of them shown in figure 3, a second adapter **201** which connects the interface **50** to the secondary LED **25**, a rectifier **202** of the supply alternating current transmitted through the electromagnetic inductive coupling between the secondary electrical windings **27** and primary electrical windings **17**, for feeding all the circuits of the rotating part **72**, and a second demodulator **204** that connects the secondary photodiode **24** to the interface **50**. The second adapter **201** has the task of modulating in a suitable way, analogically or digitally, for instance the checking electrical signal sent by the piezoelectric sensor **8** via the interface **50**, in order to optically transmit it to the secondary LED **25**, and may comprise one or more signal amplifiers, an analogic modulator and an On/Off Keying modulator, these two being connected to a multiplexer adapted to control the analog or digital driving of the secondary LED **25**. The one or more signal amplifiers, the modulators and the multiplexer are not shown in figure. The second demodulator **204** has the task of transforming the control and/or request analog electrical signal received by the secondary photodiode **24** in a corresponding suitably demodulated digital electrical signal, for instance to start the balancing procedure that is to say to control the driving electric motors via the interface **50**.

The primary circuits **13** comprise a first adapter **101** that connects the primary LED **15** to the processing and control unit **4** and has a function alike that of the second adapter **201**, being adapted to transform the control and/or request electrical signal coming from the processing and control unit **4** in a signal suitably modulated to be optically transmitted to the primary LED **15**, an oscillator **102** connected to the processing and control unit **4** and to the primary electrical windings **17** to generate a supply alternating current adapted to be transmitted to the rotating part **72** through the already cited inductive coupling, and an enabling circuit **103** adapted to enable the functions of the oscillator **102** following an appropriate signal coming from the processing and control unit **4**. In addition, the primary circuits **13** include three different blocks for processing the checking optical signal sent by the secondary LED **25** and received by the primary photodiode **14:** a first demodulator **104** that, like the second demodulator **204**, has the task of transforming the checking analog electrical signal output from the primary photodiode **14** in digital electrical signal, a signal detector **105**, comprising for instance a band-pass filter and one or more amplifiers (not shown in figure), and a bias detector **106**, that can include a band-pass filter, one or more amplifiers and a dial gauge with hysteresis (not shown in figure). The signal detector **105** and the bias detector **106** have the function of extracting from the checking analog signal, respectively, an AC component with substantially zero average, which is adapted to contain information useful for checking the machining of the workpiece **W**, and a continuous component or bias signal, which is adapted to include information about the presence and/or the proper operation of the secondary LED **25**, so of the rotating part **72**, and indicative of the validity of the AC component, namely of the fact that such AC component contains the above-mentioned useful information. The first demodulator **104**, the signal detector **105** and the bias detector **106** are connected to the processing and control unit **4**, which is able to receive and discriminate among the input analog and digital electrical signals to select that to process each time.

A method for transceiving alternating optical signals according to the present invention is extensively described in the following, such method being useful for instance for the operation of the piezoelectric sensor **8** of the grinding machine **M**.

During an initial grinding phase, the grinding wheel **1** of the grinding machine **M** rotates with a not high speed, the signals are weakly affected by noise and the communication between rotating part **72** and stationary part **71** occurs in serial manner. The processing and control unit **4** sends a signal to the enabling circuit **103** to enable the oscillator **102**, which generates a supply alternating current that is transmitted to the rotating part **72** through the inductive coupling between the secondary electrical windings **27** and the primary electrical windings **17**, and further control and/or request electrical signal to the first adapter **101**, which transforms it in the signal suitably modulated to be optically transmitted by the primary LED **15** to the secondary photodiode **24**. In the rotating part **72**, the secondary electrical windings **27** transmit to the rectifier **202** the inducted alternating current for feeding the secondary circuits **23**, and the second demodulator **204** transforms the control and/or request analog electrical signal received by the secondary photodiode **24** in the corresponding demodulated digital electrical signal to control the driving electric motors via the interface **50**. In addition, the second adapter **201** digitally modulates the checking electrical signal sent by the piezoelectric sensor **8** via the interface **50** so it is optically transmitted by the secondary LED **25** to the primary photodiode **14**. The first demodulator **104** transforms the analog electrical signal output from the primary photodiode **14** in the checking digital electrical signal, and sends the latter to the processing and control unit **4**. The signal detector **105** and the bias detector **106** are also operating and, from the same checking analog electrical signal, extract an AC component and a bias signal respectively. The processing and control unit **4** receives and discriminates among the input analog and digital electrical signals to select that to process. In particular, according to the fact that in this phase the communication between rotating part **72** and stationary part **71** occurs in serial manner, the processing and control unit **4** ignores the AC component and the bias signal, selects only the digital electrical signal output from the first demodulator **104** and properly processes it in a known way in order to carry out the checking and modify the reciprocal displacement speed between wheel slide and workpiece **W**. In this phase, the checking of the presence and the proper operation of the secondary LED **25**, that is of the rotating part **72**, is committed to the serial communication protocol.

In a phase, for example, of fine grinding, due to and depending on factors incidental to the machining type and the grinding wheel **1** used by the grinding machine **M** for finishing the workpiece **W** being machined, the signal-to-noise ratio decreases and the frequency band wherein the useful signal is, actually wherein the optimum signal-to-noise ratio is, tightens. As a consequence, the processing of the signals transmitted from the rotating part **72** to the stationary part **71** must be refined, since the selection of the frequency band wherein the signal-to-noise ratio is optimum, for instance, is essential. Similarly to what already described, the feeding of the secondary circuits **23** still occurs through the inductive coupling between the secondary electrical windings **27** and primary electrical windings **17**. On the contrary, the communication from the rotating part **72** to the stationary part **71** must occur no longer in serial manner, but in exclusive analog manner. With this aim, the processing and control unit **4** sends to the rotating part **72** the request signal, according to the already-described procedure, requiring a shift from serial to analog communication, and the rotating part **72** sends to the processing and control unit **4** an acknowledge digital signal, acknowledging the reception of the request and validating the shift to analog communication. At this point, the second adapter **201** analogically modulates the checking electrical signal sent by the piezoelectric sensor **8** via the interface **50**, so the secondary LED **25** optically transmits it to the primary photodiode **14**. From the checking analog electrical signal output by the primary photodiode **14**, the signal detector **105** and the bias detector **106** respectively extract an AC component, containing information useful to check the machining of the workpiece **W**, and a bias signal, containing information about the presence and/or the proper operation of the secondary LED **25**, and indicative of the fact that the AC component contains the above-mentioned useful information, and send them to the processing and control unit **4**. The first demodulator **104** is also operating and, from the same checking analog electrical signal, reconstructs the digital electrical signal. The processing and control unit **4** receives and discriminates among the input digital and analog electrical signals to select that to process. In particular, according to the fact that in this phase the communication between rotating part **72** and stationary part **71** occurs in analog manner, it ignores the digital electrical signal received from the first demodulator **104**, selects the AC component extracted by the signal detector **105** and the bias signal output from the bias detector **106**. Then, the processing and control unit **4** verifies, depending on the bias signal, whether the secondary LED **25** is present and properly operating, that is to say whether the AC component contains useful information, for instance it considers the secondary LED **25** is present and properly operating, or the AC component contains useful information, when the bias signal exceeds a predetermined value. If it is so, the processing and control unit **4** suitably processes in a known way the AC component in order to carry out the checking and modify the reciprocal displacement speed between wheel slide and workpiece **W**.

When the phase of fine grinding is completed, the processing and control unit **4** may return to carry out the checking depending only on the digital electrical signals received from the first demodulator **104**. With this purpose, for example, the processing and control unit **4** may send a suitable signal to the enabling circuit **103** to disable the oscillator **102**, which, by turning off, interrupts the inductive coupling between the secondary electrical windings **27** and primary electrical windings **17** and, consequently, prevents any communication between rotating part **72** and stationary part **71**. If it is required to start a further phase of initial or fine grinding, the processing and control unit **4** sends a new signal to the enabling circuit **103** to enable the oscillator **102**, the inductive coupling between the secondary electrical windings **27** and primary electrical windings **17** is reactivated, the secondary circuits **23** are fed again and the optical communication from the rotating part **72** to the stationary part **71** starts again in serial or analog manner, depending on the grinding type and according to what has been already described.

The bias signal output from the bias detector **106**, in addition to check the presence and the proper operation of the rotating part **72**, can be advantageously used for further checking. As it is known, the intensity of the alternating optical signal that propagates from the secondary LED **25** to the primary photodiode **14** suffers an attenuation that is a monotone function of the distance between the two, namely the distance between the stationary part **71** and the rotating part **72**. The bias signal is a function of said attenuation and, in particular, decreases as the distance between the stationary part **71** and the rotating part **72** increases. As a consequence, the processing and control unit **4** may process the bias signal in order to obtain information about said distance, then advantageously control the latter depending on the bias signal. In addition, the AC component of the checking analog electrical signal features a dynamics the amplitude thereof is a function of the bias signal of the same analog electrical signal. The less the dynamics of the AC component is, the higher the gain of the one or more amplifiers of the signal detector **105**, adapted to extract such AC component from the checking analog electrical signal, must be. According to what said so far, this gain may be automatically controlled depending only on the bias signal, with the clear advantage of adapting the sensitivity of the signal detector **105** to the features of the checking analog electrical signal, that is, as a last step, of adapting the sensitivity of the signal detector **105** to the intensity of the alternating optical signal received by the primary photodiode **14**.

Variations can be made to the device and method described hitherto for transceiving optical signals, without departing from the object of the present invention.

In a different embodiment of the invention, the secondary circuits **23** include a further bias detector, similar to the bias detector **106**, connected to the secondary photodiode **24**, and a gain adaptive unit connected to the second adapter **201** and to the further bias detector. According to the well-known radiation diagrams of the light emitter diodes, the alternating optical signal emitted by the secondary LED **25** is transmitted in a large part to the primary photodiode **14**, and in a small part to the secondary photodiode **24**. The secondary photodiode **24** receives such small part of the alternating optical signal emitted by the secondary LED **25** and generates a corresponding auxiliary analog electrical signal. The further bias detector has the function of extracting an auxiliary continuous component or auxiliary bias signal from said auxiliary analog electrical signal, the auxiliary bias signal containing information about the intensity of the alternating optical signal transmitted by the secondary LED **25**, to be sent to the gain adaptive unit. A method that uses such different embodiment considers that the gain of the one or more amplifiers within the second adapter **201** may be advantageously controlled in automatic and adaptive way depending only on the further bias signal. In other words, according to this method, the gain adaptive unit controls the intensity of the alternating optical signal transmitted by the secondary LED **25** on the basis of the auxiliary continuous component, independently of a possible variation of the functional features, specifically of the operation point, of the secondary LED **25**, due for instance to the thermal drift of the latter.

In a device according to the present invention, the balancing mechanism **6** may advantageously comprise additional sensors of known kind, like Hall effect magnetic sensors that emit signals indicative of a predetermined configuration of the movable masses or thermal sensors for checking the temperature of the tool **1**, conveniently located within the spindle **2** and electrically connected to the transceiver **7** via dedicated cables, said additional sensors having the function of sending to the processing and control unit **4** corresponding checking signals to process in a known way for controlling the workpiece **W** grinding procedure.

For example, the second adapter **201** may further digitally modulates a communication signal sent by the interface **50** and including service information of the relative protocol, such as identification codes of the grinding wheel or another rotating tool **1** of the machine tool **M**, and/or a diagnostic signal, containing information about the condition of the secondary circuits **23** and other elements of the rotating part **72**, for instance to detect possible short circuits, and/or a so-called acknowledge signal, for acknowledging the correct reception by the secondary photodiode **24** of the control and/or request signal, so that they can be transmitted to the processing and control unit **4** and correctly understood.

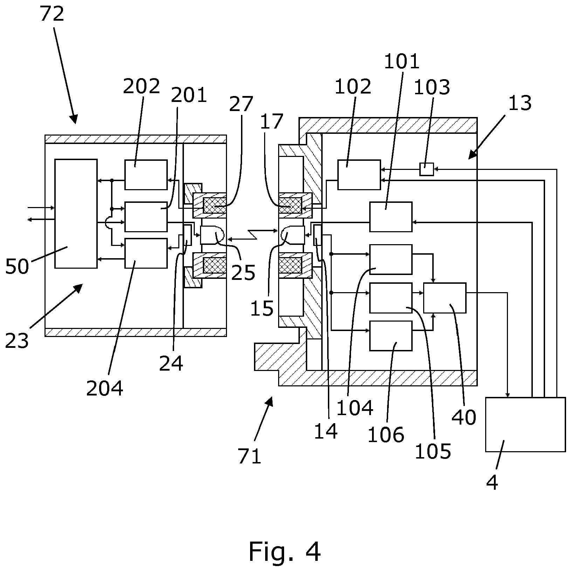

Alternatively, as it is shown in figure 4, the processing and control unit **4** may comprise a logic unit **40**, for instance comprised within the first casing **11** and connected to the stationary part **71**, in particular to the first demodulator **104**, the signal detector **105** and the bias detector **106**, and adapted to implement at least some of the functions carried out by the processing and control unit **4**, that is, when the transmission occurs in serial manner, select and process only the digital electrical signals output from the first demodulator **104** and, as an alternative, when the transmission occurs in exclusive analog manner, select the AC component extracted by the signal detector **105** and the bias signal output from the bias detector **106**, verifies, depending on the bias signal, whether the secondary LED **25** is present and properly operating, that is to say whether the AC component contains useful information, and suitably process the AC component if it is so.

When the phase of fine grinding is completed, for example, and it is desired to return to carry out the checking depending only on the digital electrical signal received by the first demodulator **104**, as an alternative to what described, that is disabling followed by enabling of the oscillator **102** respectively to interrupt and reactivate the inductive coupling between the secondary electrical windings **27** and primary electrical windings **17**, the processing and control unit **4** may send to the rotating part **72** the request signal, requiring a shift from analog to serial communication, which the rotating part **72** may reply with an acknowledge analog signal, acknowledging the reception of the request and validating the shift to serial communication.

A device for transceiving according to the present invention may be employed in a tool control system that comprises the only acoustic sensor **8,** or a similar vibration sensor, or that does not include the balancing device **6** anyway, with appropriate circuit changes and simplifications.

The device and method for transceiving alternating optical signals described above, and the relative variations, shows many advantages as they are easily and cheaply implemented and enable a reliable transmission in analog way too, being employed in particular for transceiving checking signals from a rotating part **72** to a stationary part **71**. It is indeed clear to a man skilled in the art that the device and the method for transceiving alternating optical signals according to the present invention enable to verify in simple and effective way whether the reception of an alternating optical signal with zero average, for instance transmitted from a rotating part **72** to a stationary part **71**, is or is not caused by a malfunctioning of the same rotating part **72**.

## Claims

1. Device (**7**) for transceiving alternating optical signals, comprising:
- a first part (**71**) and a second part (**72**) electrically isolated from each other;
- a secondary emitter (**25**) comprised within the second part (**72**) and facing the first part (**71**), adapted to transmit an alternating optical signal;
- a primary receiver (**14**) comprised within the first part (**71**) and facing the second part (**72**), adapted to receive said alternating optical signal and generate a corresponding analog electrical signal; and
- a signal detector (**105**), comprised within the first part (**71**) and connected to the primary receiver (**14**), adapted to extract an AC component with substantially zero average from said analog electrical signal, the AC component being adapted to contain useful information;
**characterized in that** it includes:
- a bias detector (**106**), comprised within the first part (**71**) and connected to the primary receiver (**14**), adapted to extract a continuous component from said analog electrical signal; and
- a processing and control unit (**4**) connected to the first part (**71**), adapted to receive the AC component and the continuous component, and verify, depending on the continuous component, whether the AC component contains the useful information.

2. Device (**7**) according to claim 1, wherein the processing and control unit (**4**) is adapted to verify, depending on the continuous component, whether the secondary emitter (**25**) is present and properly operating.

3. Device (**7**) according to claim 1, wherein the processing and control unit (**4**) is adapted to process the continuous component in order to obtain information about the distance between said first part (**71**) and said second part (**72**).

4. Device according to claim 1, comprising a logic unit (**40**) adapted to verify, depending on the continuous component, whether the AC component contains the useful information or the secondary emitter (**25**) is present and properly operating, and process the AC component if it is so.

5. Device (**7**) according to claim 1, comprising a first demodulator (**104**), comprised within the first part (**71**) and connected to the primary receiver (**14**), adapted to transform said analog electrical signal in digital electrical signal.

6. Device (**7**) according to claim 5, wherein the processing and control unit (**4**) is adapted to select and process said digital electrical signal, and, as an alternative, select said AC component and continuous component, verify, depending on the continuous component, whether the AC component contains the useful information or the secondary emitter **25** is present and properly operating, and process the AC component if it is so.

7. Device (**7**) according to any one of the preceding claims, wherein the first part (**71**) comprises a primary emitter (**15**) facing the second part (**72**), adapted to transmit an alternating optical signal, and the second part (**72**) comprises a secondary receiver (**24**) facing the first part (**71**), adapted to receive the alternating optical signal transmitted by the primary emitter (**15**) and generate a corresponding analog electrical signals.

8. Device (**7**) according to claim 1, wherein the second part (**72**) comprises a secondary receiver (**24**), adapted to receive the alternating optical signal transmitted by the secondary emitter (**25**) and generate a corresponding auxiliary analog electrical signal, and a further bias detector, connected to said secondary receiver (**24**), adapted to extract an auxiliary continuous component from said auxiliary analog electrical signal.

9. Device (**7**) according to claim 8, wherein the second part (**72**) comprises an adaptive gain unit, connected to the signal detector (**105**) and the bias detector (**106**) and adapted to process the auxiliary continuous component in order to obtain information about the intensity of the alternating optical signals transmitted by the secondary emitter (**25**).

10. Device (**7**) according to any one of the preceding claims, wherein the second part (**72**) is adapted to rotate about a longitudinal axis (**A**).

11. Method for transceiving alternating optical signals between a first part (**71**) and a second part (**72**) electrically isolated from each other, comprising the following steps of:
- transmitting an alternating optical signal;
- receiving the alternating optical signal and generating a corresponding analog electrical signal; and
- extracting an AC component with substantially zero average from the analog electrical signal, the AC component being adapted to contain useful information;
the method being **characterized by** the fact that it includes the further steps of:
- extracting a continuous component from the analog electrical signal; and
- verifying, depending on the continuous component, whether the AC component contains the useful information.

12. Method according to claim 11, comprising the further step of transforming said analog electrical signal in digital electrical signal.

13. Method according to claim 12, comprising the further steps of selecting said digital electrical signal, or, as an alternative, said AC component and continuous component.

14. Machine tool (**M**) for machining a mechanical workpiece (**W**), which includes an acoustic vibration sensor (**8**), a device (**7**) for transceiving alternating optical signals according to any one of claims from 1 to 10, and a processing and control unit (**4**), wherein the processing and control unit (**4**) is connected to said first part (**71**), and the acoustic vibration sensor (**8**) is connected to said second part (**72**).

15. Tool control system (**9**) for a machine tool (**M**) for machining a mechanical workpiece (**W**), which includes a processing and control unit (**4**) and a tool (**1**) connected to a spindle (**2**) and rotating with it, comprising an acoustic vibration sensor (**8**) adapted to detect vibrations due to the contact between said rotating tool (**1**) and the mechanical workpiece (**W**), and a device (**7**) for transceiving according to any one of claims from 1 to 10, connected to the vibration sensor (**8**) for a contactless connection of the latter to the processing and control unit (**4**).

16. Tool control system (**9**) according to claim 15, which comprises a balancing mechanism (**6**) connected to the device (**7**) for a contactless connection of the latter to the processing and control unit (**4**), wherein the balancing mechanism (**6**) is designated for balancing the tool (**1**) by means of signals sent by the processing and control unit (**4**) through the device (**7**).

## Patentansprüche

1. Vorrichtung (**7**) zum Senden und Empfangen alternierender optischer Signale, die Folgendes umfasst:
- ein erstes Teil (**71**) und ein zweites Teil (**72**), die elektrisch gegeneinander isoliert sind;
- einen sekundären Emitter (**25**), der im zweiten Teil (**72**) umfasst, dem ersten Teil (**71**) zugewandt und angepasst ist, ein alternierendes optisches Signal zu übertragen;
- einen primären Empfänger (**14**), der im ersten Teil (**71**) umfasst, dem zweiten Teil (**72**) zugewandt und angepasst ist, das alternierende optische Signal zu empfangen und ein entsprechendes analoges elektrisches Signal zu erzeugen; und
- einen Signaldetektor (**105**), der im ersten Teil (**71**) umfasst, mit dem primären Empfänger (**14**) verbunden und angepasst ist, eine AC-Komponente mit einem Mittelwert von im Wesentlichen null aus dem analogen elektrischen Signal zu extrahieren, wobei die AC-Komponente angepasst ist, nützliche Informationen zu enthalten;
**dadurch gekennzeichnet, dass** sie Folgendes beinhaltet:
- einen Polarisationsdetektor (**106**), der im ersten Teil (**71**) umfasst, mit den primären Empfänger (**14**) verbunden und angepasst ist, eine kontinuierliche Komponente aus dem analogen elektrischen Signal zu extrahieren; und
- eine Verarbeitungs- und Steuereinheit (**4**), die mit dem ersten Teil (**71**) verbunden und angepasst ist, die AC-Komponente und die kontinuierliche Komponente zu empfangen und in Abhängigkeit von der kontinuierlichen Komponente zu verifizieren, ob die AC-Komponente die nützlichen Informationen enthält.

2. Vorrichtung (**7**) nach Anspruch 1, wobei die Verarbeitungs- und Steuereinheit (**4**) angepasst ist, in Abhängigkeit von der kontinuierlichen Komponente zu verifizieren, ob der sekundäre Emitter (**25**) vorhanden ist und korrekt betrieben wird.

3. Vorrichtung (**7**) nach Anspruch 1, wobei die Verarbeitungs- und Steuereinheit (**4**) angepasst ist, die kontinuierliche Komponente zu verarbeiten, um Informationen über den Abstand zwischen dem ersten Teil (**71**) und dem zweiten Teil (**72**) zu erhalten.

4. Vorrichtung nach Anspruch 1, die eine Logikeinheit (**40**) umfasst, die angepasst ist, in Abhängigkeit von der kontinuierlichen Komponente zu verifizieren, ob die AC-Komponente die nützlichen Informationen enthält oder der sekundäre Emitter (**25**) vorhanden ist und korrekt betrieben wird, und die AC-Komponente zu verarbeiten, wenn dies so ist.

5. Vorrichtung (**7**) nach Anspruch 1, die einen ersten Demodulator (**104**) umfasst, der im ersten Teil (**71**) umfasst, mit dem primären Empfänger (**14**) verbunden und angepasst ist, das analoge elektrische Signal in ein digitales elektrisches Signal umzuwandeln.

6. Vorrichtung (**7**) nach Anspruch 5, wobei die Verarbeitungs- und Steuereinheit (**4**) angepasst ist, das digitale elektrische Signal auszuwählen und zu verarbeiten und, als eine Alternative, die AC-Komponente und die kontinuierliche Komponente auszuwählen, in Abhängigkeit von der kontinuierlichen Komponente zu verifizieren, ob die AC-Komponente die nützlichen Informationen enthält oder der sekundäre Emitter (**25**) vorhanden ist und korrekt betrieben wird, und die AC-Komponente zu verarbeiten, wenn dies so ist.

7. Vorrichtung (**7**) nach einem der vorhergehenden Ansprüche, wobei das erste Teil (**71**) einen primären Emitter (**15**) umfasst, der dem zweiten Teil (**72**) zugewandt und angepasst ist, ein alternierendes optisches Signal zu übertragen, und das zweite Teil (**72**) einen sekundären Empfänger (**24**) umfasst, der dem ersten Teil (**71**) zugewandt und angepasst, das alternierende optische Signal, das vom primären Emitter (**15**) übertragen wurde, zu empfangen und ein entsprechende analoge elektrische Signal zu erzeugen.

8. Vorrichtung (**7**) nach Anspruch 1, wobei das zweite Teil (**72**) einen sekundären Empfänger (**24**), der angepasst ist, das alternierende optische Signal, das vom sekundären Emitter (**25**) übertragen wurde, zu empfangen und ein entsprechendes analoges elektrisches Hilfssignal zu erzeugen, und einen weiteren Polarisationsdetektor, der mit dem sekundären Empfänger (**24**) verbunden und angepasst ist, eine kontinuierliche Hilfskomponente aus dem analogen elektrischen Hilfssignal zu extrahieren, umfasst.

9. Vorrichtung (**7**) nach Anspruch 8, wobei das zweite Teil (**72**) eine adaptive Verstärkungseinheit umfasst, die mit dem Signaldetektor (**105**) und dem Polarisationsdetektor (**106**) verbunden und angepasst ist, die kontinuierliche Hilfskomponente zu verarbeiten, um Informationen über die Stärke der alternierenden optischen Signale, die vom zweiten Emitter (**25**) übertragen wurden, zu erhalten.

10. Vorrichtung (**7**) nach einem der vorhergehenden Ansprüche, wobei das zweite Teil (**72**) angepasst ist, um eine Längsachse (**A**) zu drehen.

11. Verfahren zum Senden und Empfangen alternierender optischer Signale zwischen einem ersten Teil (**71**) und einem zweiten Teil (**72**), die elektrisch gegeneinander isoliert sind, das die folgenden Schritte umfasst:
- Übertragen eines alternierenden optischen Signals;
- Empfangen des alternierenden optischen Signals und Erzeugen eines entsprechenden analogen elektrischen Signals und
- Extrahieren einer AC-Komponente mit einem Mittelwert von im Wesentlichen null aus dem analogen elektrischen Signal, wobei die AC-Komponente angepasst ist, nützliche Informationen zu enthalten;
wobei das Verfahren durch die Tatsache gekennzeichnet ist, dass es ferner die folgenden Schritte umfasst:
- Extrahieren einer kontinuierlichen Komponente aus dem analogen elektrischen Signal und
- Verifizieren in Abhängigkeit von der kontinuierlichen Komponente, ob die AC-Komponente die nützlichen Informationen enthält.

12. Verfahren nach Anspruch 11, das den weiteren Schritt des Umwandelns des analogen elektrischen Signals in ein digitales elektrisches Signal umfasst.

13. Verfahren nach Anspruch 12, das die weiteren Schritte des Auswählens des digitalen elektrischen Signals oder, als eine Alternative, der AC Komponente und der kontinuierlichen Komponente umfasst.

14. Werkzeugmaschine (**M**) zum Bearbeiten eines mechanischen Werkstücks (**W**), die einen akustischen Vibrationssensor (**8**), eine Vorrichtung (**7**) zum Senden und Empfangen alternierender optischer Signale nach einem der Ansprüche von 1 bis 10 und eine Verarbeitungs- und Steuereinheit (**4**) beinhaltet, wobei die Verarbeitungs- und Steuereinheit (**4**) mit dem ersten Teil (**71**) verbunden ist und der akustische Vibrationssensor (**8**) mit dem zweiten Teil (**72**) verbunden ist.

15. Werkzeugsteuersystem (**9**) für eine Werkzeugmaschine (**M**) zum Bearbeiten eines mechanischen Werkstücks (**W**), das eine Verarbeitungs- und Steuereinheit (**4**) und ein Werkzeug (**1**), das mit einer Spindel (**2**) verbunden ist und sich mit ihr dreht sowie einen akustischen Vibrationssensor (**8**), der angepasst ist, Vibrationen aufgrund des Kontakts zwischen dem sich drehenden Werkzeug (**1**) und dem mechanischen Werkstück (**W**) zu detektieren, und eine Vorrichtung (**7**) zum Senden und Empfangen nach einem der Ansprüche von 1 bis 10, die mit dem Vibrationssensor (**8**) für eine kontaktlose Verbindung des letzteren mit der Verarbeitungs- und Steuereinheit (**4**) verbunden ist, umfasst.

16. Werkzeugsteuersystem (**9**) nach Anspruch 15, das einen Auswuchtmechanismus (**6**) umfasst, der mit der Vorrichtung (**7**) für eine kontaktlose Verbindung der letzteren mit der Verarbeitungs- und Steuereinheit (**4**) verbunden ist, wobei der Auswuchtmechanismus (**6**) zum Auswuchten des Werkzeugs (**1**) mithilfe von Signalen, die von der Verarbeitungs- und Steuereinheit (**4**) über die Vorrichtung (**7**) gesendet werden, designiert ist.

## Revendications

1. Dispositif (**7**) d'émission-réception de signaux optiques alternatifs, comprenant :
- une première pièce (**71**) et une deuxième pièce (**72**) isolées électriquement l'une de l'autre ;
- un émetteur secondaire (**25**) compris dans la deuxième pièce (**72**) et faisant face à la première pièce (**71**), adapté pour émettre un signal optique alternatif ;
- un récepteur primaire (**14**) compris dans la première pièce (**71**) et faisant face à la deuxième pièce (**72**), adapté pour recevoir ledit signal optique alternatif et générer un signal électrique analogique correspondant ; et
- un détecteur de signal (**105**), compris dans la première pièce (**71**) et raccordé au récepteur primaire (**14**), adapté pour extraire une composante CA avec une moyenne sensiblement nulle à partir dudit signal électrique analogique, la composante CA étant adaptée pour contenir des informations utiles ;
**caractérisé en ce qu'**il comporte :
- un détecteur de polarisation (**106**), compris dans la première pièce (**71**) et raccordé au récepteur primaire (**14**), adapté pour extraire une composante continue à partir dudit signal électrique analogique ; et
- une unité de traitement et de commande (**4**) raccordée à la première pièce (**71**), adaptée pour recevoir la composante CA et la composante continue, et vérifier, en fonction de la composante continue, si la composante CA contient les informations utiles.

2. Dispositif (**7**) selon la revendication 1, dans lequel l'unité de traitement et de commande (**4**) est adaptée pour vérifier, en fonction de la composante continue, si l'émetteur secondaire (**25**) est présent et fonctionne correctement.

3. Dispositif (**7**) selon la revendication 1, dans lequel l'unité de traitement et de commande (**4**) est adaptée pour traiter la composante continue afin d'obtenir des informations sur la distance entre ladite première pièce (**71**) et ladite deuxième pièce (**72**).

4. Dispositif selon la revendication 1, comprenant une unité logique (**40**) adaptée pour vérifier, en fonction de la composante continue, si la composante CA contient les informations utiles ou l'émetteur secondaire (**25**) est présent et fonctionne correctement, et le cas échéant traiter la composante CA.

5. Dispositif (**7**) selon la revendication 1, comprenant un premier démodulateur (**104**), compris dans la première pièce (**71**) et raccordé au récepteur primaire (**14**), adapté pour transformer ledit signal électrique analogique en signal électrique numérique.

6. Dispositif (**7**) selon la revendication 5, dans lequel l'unité de traitement et de commande (**4**) est adaptée pour sélectionner et traiter ledit signal électrique numérique et, comme alternative, sélectionner lesdites composante CA et composante continue, vérifier, en fonction de la composante continue, si la composante CA contient les informations utiles ou l'émetteur secondaire (**25**) est présent et fonctionne correctement, et le cas échéant traiter la composante CA.

7. Dispositif (**7**) selon l'une quelconque des revendications précédentes, dans lequel la première pièce (**71**) comprend un émetteur primaire (**15**) faisant face à la deuxième pièce (**72**), adapté pour émettre un signal optique alternatif, et la deuxième pièce (**72**) comprend un récepteur secondaire (**24**) faisant face à la première pièce (**71**), adapté pour recevoir le signal optique alternatif émis par l'émetteur primaire (**15**) et générer un signal électrique analogique correspondant.

8. Dispositif (**7**) selon la revendication 1, dans lequel la deuxième pièce (**72**) comprend un récepteur secondaire (**24**), adapté pour recevoir le signal optique alternatif émis par l'émetteur secondaire (**25**) et générer un signal électrique analogique auxiliaire correspondant, et un autre détecteur de polarisation, raccordé audit récepteur secondaire (**24**), adapté pour extraire une composante continue auxiliaire à partir dudit signal électrique analogique auxiliaire.

9. Dispositif (**7**) selon la revendication 8, dans lequel la deuxième pièce (**72**) comprend une unité de gain adaptatif, raccordée au détecteur de signal (**105**) et au détecteur de polarisation (**106**) et adaptée pour traiter la composante continue auxiliaire afin d'obtenir des informations sur l'intensité des signaux optiques alternatifs émis par l'émetteur secondaire (**25**).

10. Dispositif (**7**) selon l'une quelconque des revendications précédentes, dans lequel la deuxième pièce (**72**) est adaptée pour tourner autour d'un axe longitudinal (**A**).

11. Procédé d'émission-réception de signaux optiques alternatifs entre une première pièce (**71**) et une deuxième pièce (**72**) isolées électriquement l'une de l'autre, comprenant les étapes suivantes consistant à :
- émettre un signal optique alternatif ;
- recevoir le signal optique alternatif et générer un signal électrique analogique correspondant ; et
- extraire une composante CA avec une moyenne sensiblement nulle à partir du signal électrique analogique, la composante CA étant adaptée pour contenir des informations utiles ;
le procédé étant **caractérisé par le fait qu'**il comporte les étapes supplémentaires consistant à :
- extraire une composante continue à partir du signal électrique analogique ; et
- vérifier, en fonction de la composante continue, si la composante CA contient les informations utiles.

12. Procédé selon la revendication 11, comprenant l'étape supplémentaire de transformation dudit signal électrique analogique en signal électrique numérique.

13. Procédé selon la revendication 12, comprenant les étapes supplémentaires de sélection dudit signal électrique numérique ou, comme alternative, desdites composante CA et composante continue.

14. Machine-outil (**M**) destinée à usiner une pièce de fabrication mécanique (**W**), qui comporte un capteur de vibrations acoustiques (**8**), un dispositif (**7**) d'émission-réception de signaux optiques alternatifs selon l'une quelconque des revendications 1 à 10, et une unité de traitement et de commande (**4**), l'unité de traitement et de commande (**4**) étant raccordée à ladite première pièce (**71**), et le capteur de vibrations acoustiques (**8**) étant raccordé à ladite deuxième pièce (**72**).

15. Système de commande d'outil (**9**) pour une machine-outil (**M**) destinée à usiner une pièce de fabrication mécanique (**W**), qui comporte une unité de traitement et de commande (**4**) et un outil (**1**) raccordé à une broche (**2**) et tournant avec elle, comprenant un capteur de vibrations acoustiques (**8**) adapté pour détecter des vibrations dues au contact entre ledit outil rotatif (**1**) et la pièce de fabrication mécanique (**W**), et un dispositif (**7**) d'émission-réception selon l'une quelconque des revendications 1 à 10, raccordé au capteur de vibrations (**8**) pour un raccordement sans contact de ce dernier à l'unité de traitement et de commande (**4**).

16. Système de commande d'outil (**9**) selon la revendication 15, qui comprend un mécanisme d'équilibrage (**6**) raccordé au dispositif (**7**) pour un raccordement sans contact de ce dernier à l'unité de traitement et de commande (**4**), le mécanisme d'équilibrage (**6**) étant conçu pour équilibrer l'outil (**1**) au moyen de signaux envoyés par l'unité de traitement et de commande (**4**) à travers le dispositif (**7**).
